# EUROPEAN PATENT APPLICATION

(11) **EP 1 199 381 A2**
(43) Date of publication of application: **24.04.2002**
(21) Application number: 01308923.0
(22) Date of filing: 19.10.2001
(51) Int. Cl.: C23C 30/00

(54) **Cutting Tool**

(30) Priority: 19.10.2000 JP 2000318906
(71) Applicant: NGK Spark Plug Company Limited, Nagoya-shi, Aichi-ken, 460-0011 (JP)
(72) Inventor: Kato, Hideki, Mizuho-ku, Nagoya, Aichi (JP)
(74) Representative: Nicholls, Michael John

(57) **Abstract**

A ceramic substrate 4 of a tool body 1 is made of silicon nitride ceramic, and the surface of the ceramic substrate 4 is coated with a titanium carbide/nitride coating layer 1f. The coating layer 1f has a structure made mainly of columnar crystal grains grown in the layer thickness direction, and when an average size of crystal grains observed on the surface is expressed by d and an average thickness of the coating layer by t, t is adjusted to between 0.5 and 3 µm and a d/t value to at least 0.1 and at most 0.5. Such a coating layer 1f is formed by a CVD method at the formation temperature in the intermediate low temperature range of 750°C to 900°C.

## Description

The present invention relates to a cutting tool in which a tool body is made of ceramic and which is used as a throwaway chip, an end mill, a drill or the like. More specifically, it relates to a cutting tool in which surface coating is applied to the tool body made of ceramic for improving wear resistance.

As the foregoing cutting tool, multiple coating layers of aluminum oxide, titanium carbide and the like have been so far formed on a surface of a substrate made of silicon nitride ceramic by a CVD method (Chemical Vapour Deposition method), which is disclosed in, for example, Japanese Patent Publication No. 49,681/1991 or Japanese Patent Laid-Open No. 246,511/1994. These coating layers are formed mainly for improving wear resistance or heat resistance of a tool.

In the foregoing documents, however, there was a problem that not so much attention was paid to a residual stress that was generated in a coating layer during the film formation and a marked improvement in performance was not necessarily expected. That is, in the CVD method, a technique is employed in which while a substance constituting a coating layer is formed by a chemical reaction of gaseous starting materials, it is laminated on a surface of a ceramic substrate. This reaction is generally conducted at a high temperature of more than 1,000°C for activating starting materials. And, when a difference in thermal expansion coefficient between a coating layer to be formed and a ceramic substrate is great, a great residual stress is generated on a coating layer during the cooling to room temperature after the film formation. Further, when the coating layers are constructed of materials different in thermal expansion coefficient in plural layers, a difference in thermal expansion coefficient between the layers can also be a cause of a residual stress. A ceramic tool can be excellent in wear resistance. However, when such a residual stress is generated in excess, there arises a problem that peeling of the coating layers tends to occur in using the tool.

For example, in order to solve the problems, Japanese Patent Laid-Open No. 212,183/1988 proposes a tool in which an aluminum oxide/nitride layer is formed on a surface of a substrate, another aluminum oxide/nitride layer, a titanium carbide layer, a titanium nitride layer and a titanium carbide/nitride layer are further formed thereon in this order and a titanium nitride layer is still further formed on the outermost layer. However, in recent years, since labor saving or processing in higher efficiency is being increasingly demanded, an improvement in adhesion of coating layers is not said to be satisfactory even in the tool of the foregoing documents.

Moreover, in case of using a tool under heavy cutting conditions of exerting a high load mechanically, a tool is heated at a high temperature by rubbing in contact with a member to be cut. However, when a difference in thermal expansion coefficient between a coating layer and a ceramic substrate is great, a great thermal shock comes to be applied to a tool by heating and cooling. As a result, there is also a problem that breakage resistance of a tool tends to be insufficient. For example, when thermal expansion coefficient of a coating layer is higher than that of a substrate, a residual stress generated in the coating layer results in polling in the cooling after the CVD film formation which gives a great factor to decrease breakage resistance of the tool. Especially, in case of intermittent cutting, such a thermal shock is repeatedly applied to the tool, with the result that the life of the tool is considerably decreased.

The invention aims to provide a ceramic cutting tool which can secure stable cutting performance over a long period of time even under cutting conditions of exerting a high load thermally and mechanically and which can be produced at low costs.

In order to solve the problems, the cutting tool of the invention is characterized in that
a tool body is provided in which a surface of a ceramic substrate made of silicon nitride ceramic is coated with a titanium carbide/nitride coating layer,
the titanium carbide/nitride coating layer has a structure made mainly of columnar crystal grains grown in the layer thickness direction, and when an average size of crystal grains observed on the surface of the titanium carbide/nitride coating layer is expressed by d and an average thickness of the titanium carbide/nitride coating layer by t, t is adjusted to between 0.5 and 3 µm and a d/t value to at least 0.1 and at most 0.5.

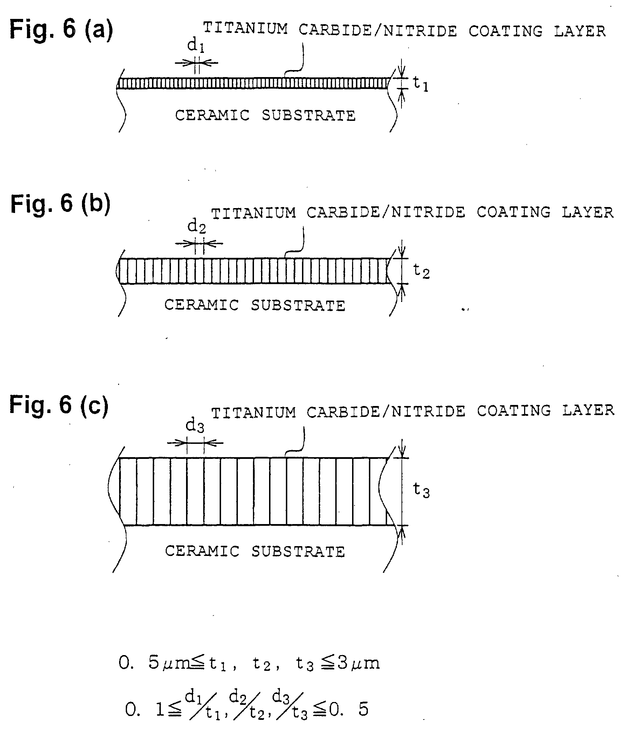

The main point in the invention lies in how to suppress the decrease in breakage resistance in the ceramic cutting tool having the coating layer formed thereon while maintaining adhesion between the coating layer and the ceramic substrate. In view of this point, the present inventors have conducted various investigations. Consequently, it has been found that the breakage resistance is advantageously improved by adopting silicon nitride ceramic as a ceramic substrate and further especially titanium carbide/nitride as a material of a coating layer. And, they have further assiduously conducted investigations, and have consequently found that the titanium carbide/nitride coating layer is, as schematically shown in Fig. 6, formed to have a structure made mainly of columnar crystal grains grown in the layer thickness direction (hereinafter referred to as a columnar structure) and when an average size of crystal grains observed on the surface of the titanium carbide/nitride coating layer (hereinafter simply referred to also as an average size of columnar crystal grains) is expressed by d and an average thickness of the titanium carbide/nitride coating layer by t, t is adjusted to between 0.5 and 3 µm and a d/t value to at least 0.1 and at most 0.5 whereby a residual stress of the coating layer is reduced and better breakage resistance is obtained. This finding has led to the completion of the invention.

In the titanium carbide/nitride coating layer, while the average thickness t is adjusted to 3 µm, a certain small value, the d/t value is adjusted to 0.5 or less, whereby a residual stress in the coating layer is suppressed and breakage resistance of the tool can be greatly improved. And, according to the present inventors' studies, the structure of the titanium carbide/nitride coating layer can be the columnar structure by the CVD film formation. In this case, however, the d/t value varies depending on the formation temperature of the titanium carbide/nitride coating layer. At the lower formation temperature, the growth of crystal grains in the inner direction of the coating layer surface is relatively suppressed with respect to the growth in the thickness direction of the coating layer. Accordingly, the d/t value tends to be decreased. And, the effect of suppressing the residual stress in which the breakage resistance of the tool is markedly improved becomes outstanding especially when the formation temperature of the titanium carbide/nitride coating layer is limited to such an extent that the d/t value reaches 0.5 or less. This makes it possible to effectively suppress the breakage or the like in using the tool while using the less costly composite ceramic.

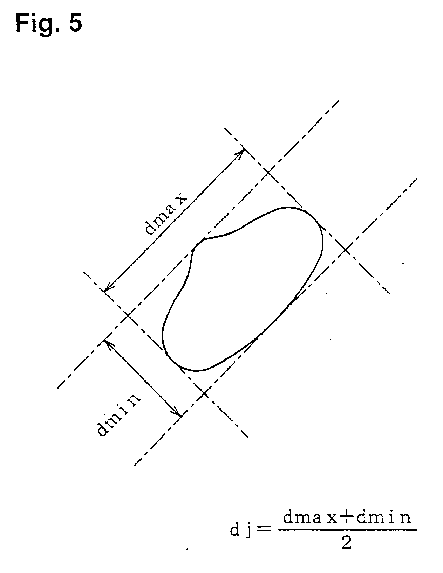

Incidentally, in the specification, a size dj of a crystal grain observed on the surface of the titanium carbide/nitride coating layer is, as shown in Fig. 5, expressed by, when various circumscribed parallel lines not crossing the inside of the grain are drawn relative to the outline of the grain appearing on the surface of the titanium carbide/nitride coating layer upon changing a positional relation with the grain, an average value of a minimum interval dmin and a maximum interval of the parallel lines (namely, dj = (dmin + dmax)/2). And, the average size d is the average value dj of all grains appearing on the surface.

When d/t exceeds 0.5, the effect of suppressing the residual stress becomes unsatisfactory, and the improvement in breakage resistance is not expected. Meanwhile, when d/t is less than 0.1, it means that the formation temperature of the titanium carbide/nitride coating layer is extremely decreased. A uniform titanium carbide/nitride coating layer is not obtained, or adhesion between the titanium carbide/nitride coating layer and the ceramic substrate is decreased, and peeling of a coating layer or the like tends to occur in using the tool. More preferably, d/t is 0.1 to 0.3.

Further, the level of the residual stress of the titanium carbide/nitride coating layer is also influenced by the thickness of the titanium carbide/nitride coating layer. In the invention, the average thickness of the titanium carbide/nitride coating layer is set at 0.5 to 3 µm whereby the residual stress can effectively be suppressed to improve the breakage resistance of the tool. When the average thickness of the titanium carbide/nitride coating layer is less than 0.5 µm, the wear resistance is unsatisfactory. When it exceeds 3 µm, the residual stress level is increased which results in impairing the breakage resistance.

Specifically, it is advantageous that the titanium carbide/nitride coating layer is formed by CVD in the intermediate low formation temperature range of 750°C to 900°C. When the formation temperature (reaction temperature) is higher than 900°C, the residual stress of the titanium carbide/nitride coating layer becomes too high, and the breakage resistance of the tool is not satisfactorily secured. Meanwhile, when it is less than 750°C, a chemical reaction for forming titanium carbide/nitride does not proceed satisfactorily, and a uniform titanium carbide/nitride coating layer is hardly obtained. The formation temperature of the titanium carbide/titanium coating layer is preferably 830°C to 880°C.

In the CVD film formation, a ceramic substrate in a predetermined shape is mounted in a reaction vessel, and while this is heated at the foregoing reaction temperature, starting gases are passed along with a carrier gas (for example, a hydrogen gas (H₂)). While a substance of a coating layer is formed by the chemical reaction of the starting gases, it is laminated on the surface of the ceramic substrate. As the starting gases, a gas containing a titanium source component (for example, titanium chloride such as titanium tetrachloride (TiCl₄) or the like) and a nitrogen source component (for example, a nitrogen gas (N₂) or ammonia (NH₃)) can be used in the formation of the titanium nitride coating layer. Meanwhile, a mixture obtained by further mixing the starting gases of the titanium nitride coating layer with a carbon source component (hydrocarbon such as methane or the like, and other organic compound gases) can be used in the formation of the titanium carbide/nitride coating layer. Moreover, a nitrogen-containing organic compound (for example, CH₃CN (acetonitrile)) can also be formed as a starting gas of a titanium carbide/nitride coating layer.

In the titanium carbide/nitride coating layer formed by CVD in the intermediate low temperature range, as shown in Figs. 6(a) to 6(c), there is a tendency that as the growth thickness t of the layer is increased in the order of t1 → t2 → t3, the average size d of the columnar crystal grain is also increased in the order of d1 → d2 → d3. In the invention, however, in each case, it is important that the t/d (= d1/t1, d2/t2, d3/t3) value is in the range of at least 0.1 and at most 0.5, whereby the effects of the invention can be attained.

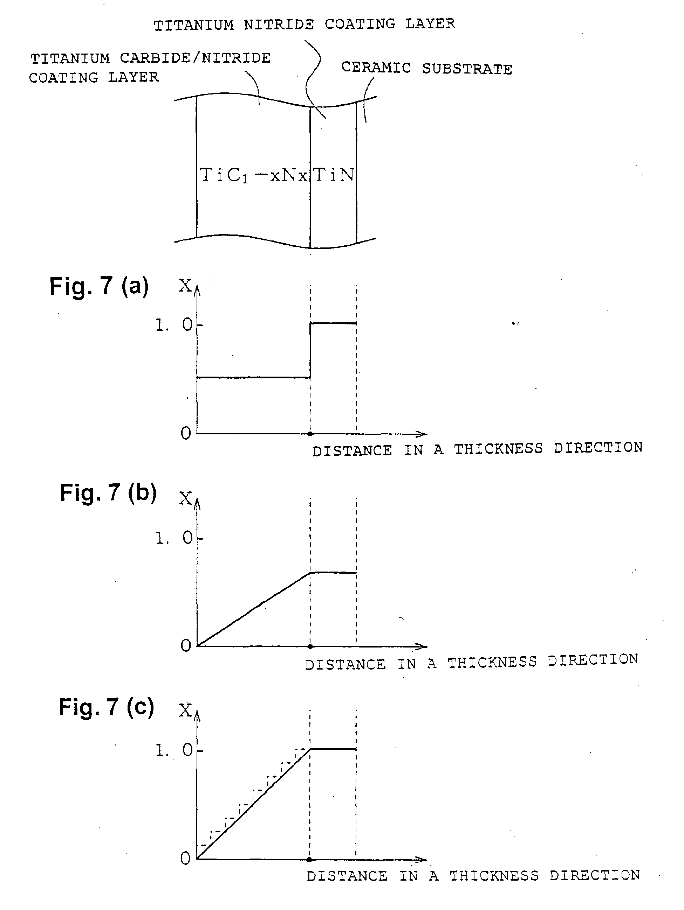

Titanium carbide/nitride constituting the titanium carbide/nitride coating layer is a solid solution of titanium carbide (general formula: TiC) and titanium nitride (general formula: TiN), and the general formula is TiC₁₋ₓNₓ (hereinafter simply referred to also as TiCN). The X value can be set variously depending on a composition ratio of the nitrogen source component and the carbon source component in the starting gases. It is also possible to form a coating layer in which a composition ratio of a nitrogen source component and a carbon source component during the film formation is changed either continuously or stepwise and an X value is changed in the thickness direction either continuously or stepwise. For example, when the X value is smaller (that is, when an amount of a titanium carbide component is larger), wear resistance of a coating layer is improved. However, when a substrate of a titanium carbide/nitride coating layer is a substrate made of silicon nitride ceramic or a titanium nitride layer to be described later, a larger X value (that is, an amount of a titanium nitride component is larger) is sometimes advantageous in view of the improvement in adhesion. At this time, for example, a layer is formed while gradually increasing a ratio of an amount of a carbon source component to an amount of a nitrogen source component, whereby a coating layer of a gradient composition type in which X is larger on the side of the ceramic substrate and smaller on the side of the layer surface can be formed as shown in Fig. 7(b) or 7(c).

Next, the silicon nitride ceramic constituting the ceramic substrate is made mainly of silicon nitride (Si₃N₄), and the remaining component is a sintering aid component. At least one type selected from an elemental group of Groups 3A, 4A, 5A, 3B (for example, Al (aluminum oxide or the like)) and 4B (for example, Si (silica or the like)) in the periodic table can be incorporated in the range of, for example, 5 % by mass or less, calculated as an oxide. These are present in the sintered product in the state of an oxide, a double oxide (for example, a metal silicate) or the like.

As the sintering aid component of Group 3A, Sc, Y, La, Ce, Pr, Nd, Sm, Eu, Gd, Tb, Dy, Ho, Er, Tm, Yb and Lu are generally used. The content of these elements R is calculated as RO₂ in Ce only and as an R₂O₃-type oxide in others. Of these, an oxide of a heavy rare earth element such as Y, Tb, Dy, Ho, Er, Tm or Yb is preferably used because it is effective for improving strength, toughness and wear resistance of a silicon nitride sintered product. Further, magnesia spinel, zirconium oxide and the like, other than this, are also available as a sintering aid.

Silicon nitride as a constituent of the ceramic substrate has a considerably small thermal expansion coefficient in comparison with aluminum oxide (Al₂O₃), titanium carbide (TiC), titanium nitride (TiN) or titanium carbide/nitride (typified by a composition of TiC_{0.5}N_{0.5} in the table) used as a constituent of the coating layer in the ceramic tool, and a residual stress tends to occur in the coating layer. And, when the content of the sintering aid component is decreased, its thermal expansion coefficient is close to that of pure silicon nitride. Consequently, a difference in thermal coefficient with the coating layer is further increased, and breakage resistance owing to residual stress tends to occur all the more. Accordingly, in the past, although the decrease in the amount of the sintering aid component was found advantageous for improving wear resistance, there was no choice but to incorporate a large amount of the sintering aid component to a certain extent in view of securing breakage resistance.

**Table 1**

| Material | Si₃N₄ | Al₂O₃ | TiC | TiCN | TiN |
|---|---|---|---|---|---|
| Thermal expansion coefficient (x 10/°C) | 3.2 | 8.5 | 7.6 | 8.4 | 9.2 |

However, since the residual stress to the coating layer can greatly be suppressed by adopting the invention, it is possible to decrease the content of the sintering aid component in the silicon nitride ceramic to a lower value than an ordinary level, for example, preferably to less than 5 % by mass. Consequently, wear resistance of the ceramic substrate can be improved while maintaining breakage resistance of the tool. Nevertheless, for avoiding a disadvantage that the sintering of silicon nitride ceramic itself becomes difficult, it is preferable to add the sintering aid component in an amount of at least 1 % by mass.

The structure of silicon nitride ceramic is that main phase crystal grains containing silicon nitride as a main component are bound through a vitreous and/or crystalline binding phase. Incidentally, it is advisable that the main phase is made mainly of an Si₃N₄ phase in which a β-conversion rate is more than 70 % by volume (preferably more than 90 % by volume). In this case, the Si₃N₄ phase may be a phase in which a part of Si's or N's is substituted with Al or oxygen or further a phase subjected to formation of a solid solution with a metal atom such as Li, Ca, Mg, Y or the like. For example, sialons represented by the following formulas can be shown;
β-sialon: Si_{6-z}Al_{z}O_{z}N_{8-z} (z = 0 to 4.2)
α-sialon: Mₓ(Si, Al)₁₂(O,N)₁₆ (x = 0 to 2)
M: Li, Mg, Ca, Y, R (R is a rare earth element except La and Ce).
By the way, in the invention, "main component" ("made mainly of", "mainly" or the like has the same meaning) means that in a substance in question, the content of its component is 50 % by mass or more, unless otherwise instructed.

The sintering aid component mainly constitutes the binding phase, but a part thereof may be incorporated in the main phase. Incidentally, the binding phase sometimes contains, besides the component added on purpose as a sintering aid, unavoidable impurities such as silicon oxide contained in the silicon nitride starting powder and the like.

Next, in a preferred aspect of the invention, as shown in Fig. 7, a titanium nitride coating layer can be provided between the titanium carbide/nitride coating layer and the ceramic substrate (this titanium nitride layer can also be formed by the CVD film formation in the intermediate low temperature range). Since titanium nitride has better affinity for silicon nitride ceramic constituting the ceramic substrate than titanium carbonate/nitride, it is possible to increase adhesion of the overall coating layer by the insertion of the titanium nitride layer and to control the disadvantage such as peeling of the layer or the like more effectively. In this case, it is advisable that the average thickness of the titanium nitride layer inserted is adjusted to the range of 0.2 to 1 µm. When the average thickness is less than 0.2 µm, the effect of improving adhesion sometimes cannot be obtained satisfactorily. When it exceeds 1 µm, the effect of suppressing the residual stress is decreased, and the decrease in breakage resistance or the like tends to be invited. Fig. 7(a) is an example in which the X value of titanium carbide/nitride constituting the titanium carbide/nitride coating layer is set at a nearly fixed value (0.5 herein) in the layer thickness direction. Moreover, in Fig. 7(c), a solid line is an example in which X is continuously changed in the layer thickness direction, and a broken line is an example in which X is stepwise changed.

Incidentally, Fig. 7(b) is an example in which the X value is, after gradually increased, finally maintained constantly at a value smaller than 1. In this case, the whole is a titanium carbide/nitride coating layer. However, the first layer in contact with the ceramic substrate is a titanium carbide/nitride layer in which the X value is nearly fixed in the thickness direction, and the second layer on the side of the layer surface is a titanium carbide/nitride layer of a gradient composition type in which the X value is changed in the layer thickness direction.

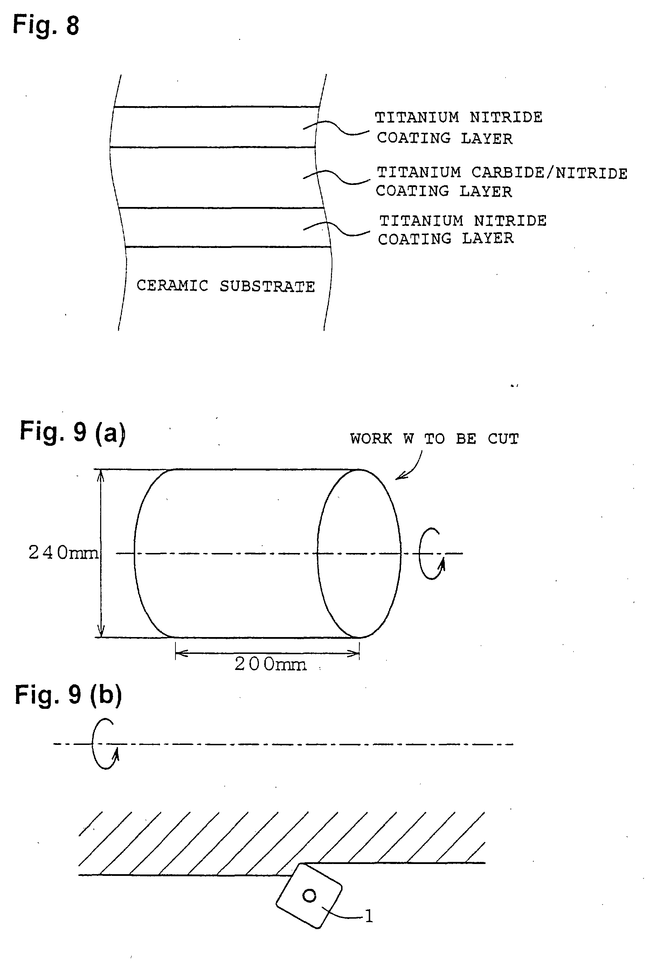

Moreover, as shown in Fig. 8, the outside of the titanium carbide/nitride coating layer can optionally be coated with a titanium nitride coating layer (this titanium nitride coating layer can also be formed by the CVD film formation in the intermediate low temperature range). Since titanium nitride has a smaller friction coefficient than titanium carbide/nitride, wear resistance between the tool and a work to be cut can be reduced by coating with the titanium nitride coating layer. Even when heavy cutting or the like is conducted, it is possible to suppress the increase in the temperature of the edge. Consequently, a thermal shock due to addition of a temperature cycle can be lessened to further improve breakage resistance. Moreover, since heat generation is itself controlled, it can also contribute to improving wear resistance. It is advisable that the average thickness of such a titanium nitride coating layer is adjusted to the range of 0.3 to 1 µm. When the average thickness is less than 0.3 µm, the effect of decreasing frictional resistance is at times not obtained satisfactorily. When it exceeds 1 µm, the effect of suppressing the residual stress is decreased, and the decrease in breakage resistance or the like tends to be invited.

By the way, in the invention, the "titanium carbide/nitride coating layer" attains the aim of the invention so long as it is made mainly of titanium carbide/nitride, and it may contain unavoidable impurities or a secondary component made of an intentional addition component unless the foregoing effects are impaired. Further, the "titanium nitride coating layer" also attains the aim of the invention so long as it is made mainly of titanium nitride, and it may contain unavoidable impurities or a secondary component made of an intentional addition component (provided a titanium carbide component in excess of an unavoidable impurity level (for example, 0.5 % by weight is an upper limit) is excluded) unless the foregoing effects are impaired.

Embodiments of the invention will now be described, by way of example only, with reference to the accompanying drawings in which:
Fig. 1 is a perspective view, a side fragmentary sectional schematic view and a fragmentary enlarged perspective view (including some modification examples) showing a throwaway chip as a working example of a ceramic cutting tool in the invention;
Fig. 2 is a perspective view showing a state where the throwaway chip in Fig. 1 is installed in a chip holder;
Fig. 3 is a perspective view and an enlarged fragmentary side view showing an example in which the ceramic cutting tool of the invention is constructed as a milling cutter;
Fig. 4 is a front view and a bottom view showing an example in which the ceramic cutting tool of the invention is constructed as a drill;
Fig. 5 is a descriptive view indicating a definition of a size of a crystal grain;
Fig. 6 is a schematic view of a titanium carbide/nitride coating layer;
Fig. 7 is a conceptual view showing an example of a component distribution mode in the thickness direction of the coating layer;
Fig. 8 is a schematic view showing an example in which a titanium nitride layer is formed on an under side or an upper side of the titanium carbide/nitride coating layer;
Fig. 9 is a descriptive view showing a positional relation between a work to be cut and a tool in a cutting test;

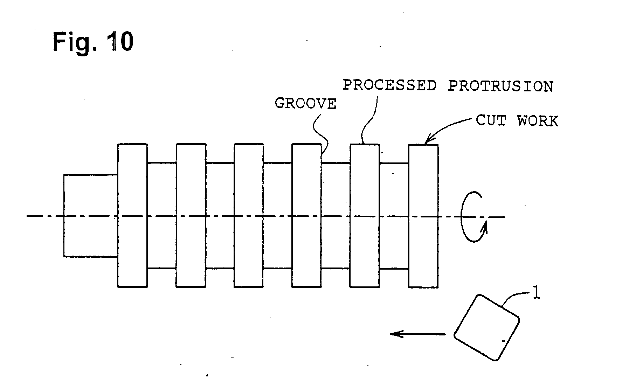

Fig. 10 is a front view showing a shape of a cut work;
Fig. 11 shows SEM-observed images of a surface ((a)) and a broken surface ((b)) of a coating layer formed on test article No. 2 (Example) in a test conducted in Example;
Fig. 12 shows SEM-observed images of a surface ((a)) and a broken surface ((b)) of a coating layer formed on test article No. 13 (Comparative Example) therein.

Description of Reference Numerals used in the Drawings:
1 throwaway chip (tool body)
1c cutting face
1e flank
1f coating layer
4 ceramic substrate
11 chip holder

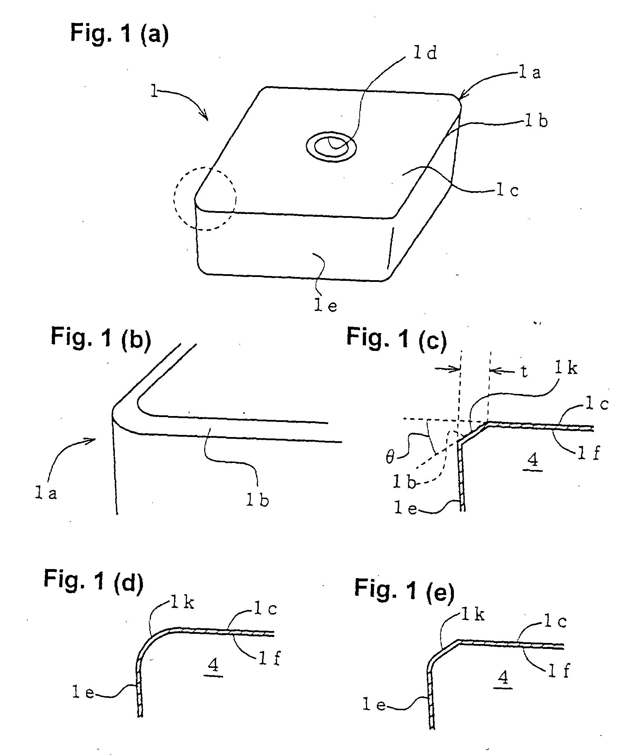

Fig. 1 is a working example of a ceramic cutting tool in the invention, showing a throwaway chip 1 (hereinafter simply referred to also as a chip) constituting the tool body. The chip 1 has a structure that, as shown in Fig. 1(a), the entire outer surface of a ceramic substrate formed in a flat, nearly square block shape is coated with a coating layer 1f shown in Fig. 1(c). For example, the main surface 1c forms a cutting face (hereinafter referred to also as a cutting face 1c), and the side surface 1e forms a flank (hereinafter referred to also as a flank 1e). In the chip 1, each corner la is rounded as shown in Fig. 1(b), and a chamfer 1k is formed according to each cutting edge 1b as shown in Fig. 1(c). Further, as shown in Fig. 1(a), a penetration hole 1d for fitting the chip 1 to a chip holder not shown is formed through the center of the main surface 1c in the thickness direction. The chamber 1k has a flat section, and an angle θ formed with the main surface 1c as the cutting face is adjusted to the range of, for example, 20 to 35°. By the way, the sectional shape of the chamber 1k can be an outwardly curved surface (rounded surface) as shown in Fig. 1(d) or a combination of a flat surface and a curved surface as shown in Fig. 1(e).

The ceramic substrate 4 is made of silicon nitride ceramic, and the sintering aid component incorporated is, for example, 5 % by mass or less. Further, the coating layer 1f is, for example, a titanium carbide/nitride coating layer as shown in Fig. 6. When an average size of crystal grains observed on the surface of the coating layer is expressed by d (= d1, d2, d3) and an average thickness of the coating layer by t, t (= t1, t2, t3) is adjusted to between 0.5 and 3 µm and a d/t value to at least 0.1 and at most 0.5.

An example of a process for producing the chip 1 is described below.

As starting powders, a silicon nitride powder and a sintering aid powder are mixed in predetermined amounts, a binder is added thereto for mixing as required, and the mixture is molded by a known method such as press molding (including a cold isostatic pressing method), injection molding or the like to form a molded article. Further, the molded article is sintered to obtain a ceramic substrate 4. Subsequently, the ceramic substrate 4 is installed in a reaction vessel, and this is heated in an intermediate low temperature range of 750°C to 900°C with a heater mounted within the reaction vessel. In the formation of the titanium carbide/nitride coating layer, titanium tetrachloride and a gas as a carbon/nitrogen source (for example, acetonitrile or a mixed gas of nitrogen and hydrocarbon such as methane or the like) as starting gases are, in this state, passed through the reaction vessel along with hydrogen as a carrier gas. While titanium carbide/nitride is formed by the decomposition·reaction of the starting gases, it is laminated and grown on the surface of the ceramic substrate 4 to form the coating layer 1f. By the way, the reaction temperature is set at the foregoing range, whereby the d/t value of the coating layer 1f is adjusted to the range of 0.1 to 0.5. Besides, the absolute value of the thickness t at which to form the coating layer 1f is adjusted to the range of 0.5 to 3 µm according to the growth time.

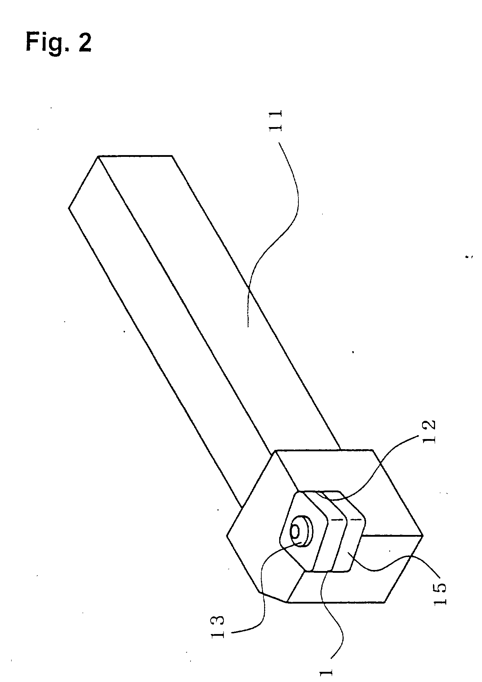

The chip 1 is used by being installed in the chip holder 11 for easy attaching and detaching as shown in Fig. 2. Specifically, the chip 1 and a sheet member 15 are overlaid with the chip 1 on an upper portion, and these are inserted into a concave installation part 12 formed in the tip of the chip holder 11. And, a screw 13 is penetrated into the penetration hole 1d (Fig. 1) of the chip 1 and a penetration hole (not shown) of the sheet member 15, and is screwed into the side of the chip holder 11, whereby the chip 1 is fastened in the chip holder 11 for easy attaching and detaching.

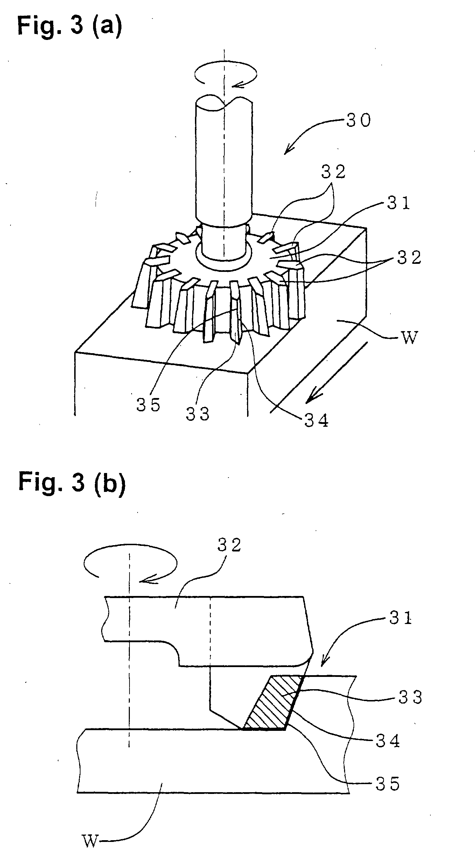

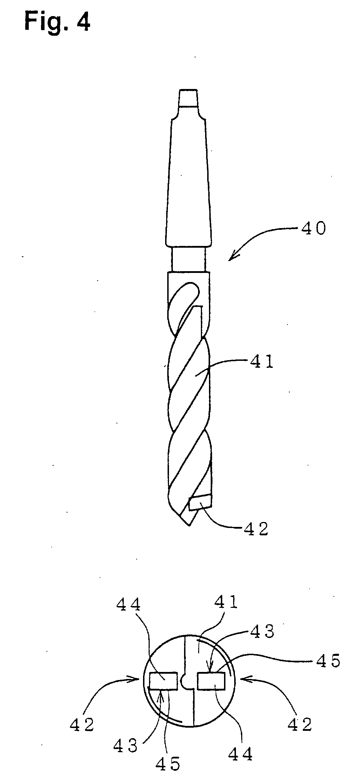

By the way, it goes without saying that the ceramic cutting tool of the invention can be applied to other cutting tools such as a milling cutter, a drill and the like. Fig. 3 illustrates a face milling cutter 30 which is an example thereof. Plural cutting chips 32 are fixed in an outer peripheral surface of a rotary base 31. W indicates a work to be cut. Each of the cutting chips 32 is formed of the same material as the chip 1, and the same coating layer as in the chip 1 is formed on a cutting face 33 and a flank 34 which are adjacent relative to a cutting edge 35. Meanwhile, Fig. 4 shows a drill 40 as another example. Two drill chips 42 are installed on a top surface of a shaft-like body 41. Each of the chips 42 is formed of the same material as the chip 1, and the same coating layer as in the chip 1 is formed on a cutting face 43 and a flank 44 which are adjacent relative to a cutting edge 45.

Examples of the invention are described below.

First, an α-type silicon nitride powder (average particle diameter 0.5 µm, oxygen content 1.0 % by mass) was prepared as a starting powder, and an aluminum oxide powder, a magnesium oxide powder, a yttrium oxide powder, a ytterbium oxide powder and a zirconium oxide powder (average particle diameter of all these 1 µm or less) as sintering aid powders. And, these powders were mixed according to various compositions shown in Table 2, and wet-mixed and pulverized along with an alcohol as an organic solvent for 24 hours using a ball mill to obtain a starting slurry. And, after this starting slurry was dried, a paraffin as a binder was added, and the mixture was mold-pressed at a pressure of 1 ton/cm² to obtain a molded article. After the removal of the binder, the molded article was sintered in a nitrogen gas atmosphere at various temperatures for a period of time as shown in Table 2. Incidentally, after the sintering, a hot isostatic pressing (HIP) treatment was conducted, as required, at a temperature of 1600°C in a nitrogen gas atmosphere with a pressure of 150 MPa for 2 hours (whether the HIP treatment is conducted or not is shown in Table 2). The thus-obtained four sintered products were cut into the shape shown in Fig. 1 to form ceramic substrates 4. Incidentally, as the size of the ceramic substrates 4, a size regulated as SNGN120408 in ISO standard was adopted.

**Table 2**

| Sample No. | Composition (proportion by weight) | Sintering conditions | Theoretical density ratio (%) |
|---|---|---|---|
| 1 | MgO(1)-Y₂O₃(1) | 1900°C - 4Hr +HIP | 99.6 |
| 2 | MgO(0.5)-Al₂O₃(1)-Yb₂O₃(2) | 1850°C - 4Hr | 99.5 |
| 3 | MgO(1)-Y₂O₃(2)-ZrO₂(1) | 1850°C - 4Hr | 99.8 |
| 4 | MgO(1.5)-Al₂O₃(1)-Y₂O₃(1.5)-ZrO₂(2) | 1800°C - 4Hr | 99.8 |

The thus-obtained four ceramic substrates 4 were placed in a reaction vessel of a known CVD device, and coating layers having the following conditions were formed in plural layers either singly or in combination to afford test chips. Incidentally, the film thickness of the coating layer formed is changed variously by adjusting the reaction time. As indicated below, "MT" means "moderate temperature" (or intermediate temperature), and "HT" means "high temperature". Therefore, for example, "MT-TiCN" means TiCN formed at a moderate temperature, and so forth.
(1) MT-TiCN layer
   Layer formation temperature: 870°C;
   Pressure of atmosphere: 80 hPa;
   Type of a carrier gas (flow rate): H₂ (18 l/min);
   Types of starting gases (flow rate): N₂ (10 l/min), TiCl₄ (1.8 ml/min), CH₃CN (0.3 ml/min).
(2) TiN Layer
   Layer formation temperature: 900°C;
   Pressure of atmosphere: 800 hPa;
   Type of a carrier gas (flow rate): H₂ (13.5 l/min);
   Types of starting gases (flow rate): N₂ (5.6 l/min), TiCl₄ (0.8 ml/min).
(3) HT-TiCN layer
   Layer formation temperature: 980°C;
   Pressure of atmosphere: 800 hPa;
   Type of a carrier gas (flow rate): H₂ (13.5 l/min);
   Types of starting gases (flow rate)): N₂ (3.5 l/min), TiCl₄ (0.8 ml/min),
   CH₄ (1.0 l/min).
(4) Aluminum oxide (Al₂O₃) layer
   Layer formation temperature: 1010°C;
   Pressure of atmosphere: 80 hPa;
   Type of a carrier gas (flow rate): H₂ (16.5 l/min);
   Types of starting gases (flow rate)): CO₂ (0.8 l/min); HCl (1.5 l/min), H₂S (60 ml/min). AlCl₃ is formed as a source by a reaction with HCl using metallic aluminum as an aluminum source.

By the way, the details of the test articles produced by a combination of various coating layers are shown in Table 3. In each test article, the coating layer(s) is (are) formed from the side of the ceramic substrate in the order described (incidentally, "Substrate No." in the table refers to the number of the ceramic substrate used in Table 2).

Further, the structure of the coating layer after the formation was examined through X-ray diffraction. Consequently, it was found that the coating layers in (1) and (3) were made mainly of titanium carbide/nitride and the coating layer in (2) was made mainly of titanium nitride. Further, when the composition of the coating layer in (1) was examined by X-ray photoelectron spectroscopy, it was found to be TiC_{0.3}N_{0.7}. Meanwhile, with respect to the test piece having the titanium carbide/nitride coating layer formed thereon, the surface was observed through SEM, and the size of crystal grains was measured on the image observed to find an average value d (incidentally, in the titanium carbide/nitride coating layer further coated with the titanium nitride coating layer, the size of crystal grains is measured on the surface of the titanium carbide/nitride coating layer before the formation of the titanium nitride coating layer). Moreover, each test piece was cut in the section intersecting the main surface after a cutting test to be described later, and an average film thickness t of the titanium carbide/nitride coating layer was measured from the image of the section. The results are shown in Table 3.

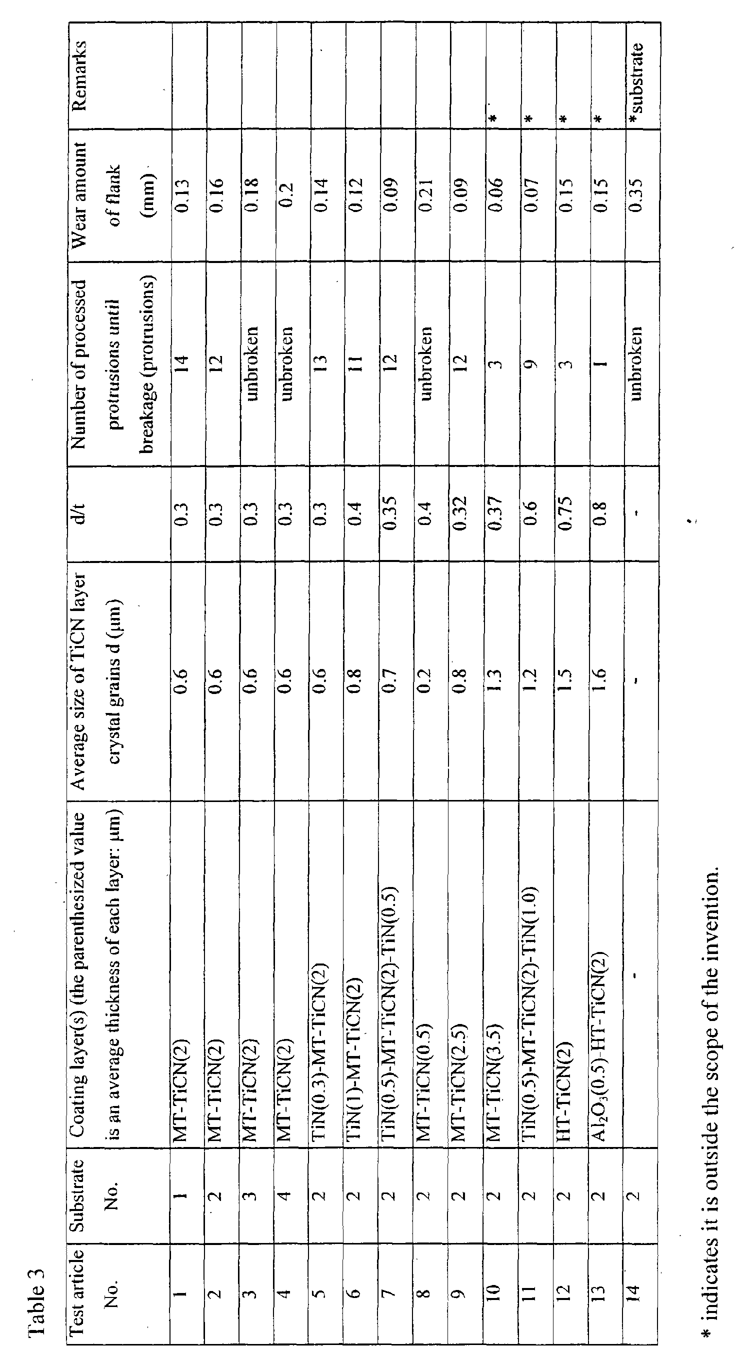

Next, the evaluation of the cutting performance of each sample (tool) was conducted under the following conditions. That is, as shown in Fig. 9(a), a rod-like work W to be cut was rotated around an axis, a test chip was contacted with its outer peripheral surface as shown in Fig. 9(b), and the outer peripheral surface of the work W to be cut was continuously dry-cut under the following cutting conditions using one main surface 1c as a cutting face and a side surface 1e as a flank:
Work to be cut: gray cast iron (JIS: FC200)
Shape: Round rod (outer diameter φ 240 mm, length 200 mm: provided circumferential grooves having a width of 10 mm (depth of 10 mm) are formed axially at intervals of 10 mm (a portion between adjacent grooves is a processed protrusion): incidentally, a groove was freshly formed whenever the entire periphery was cut once to maintain a groove depth of 10 mm);

| | |
|---|---|
| Cutting velocity V | 150 m/min; |
| Feed rate | 0.6 mm/l rotation; |
| Cutting amount | 2.0 mm; |
| Cutting oil | no (dry cutting); |
| Edge treatment | chamfer 0.1 mm x 25°; |
| Evaluation method | evaluation of breakage resistance with a processing distance until an edge is broken. |

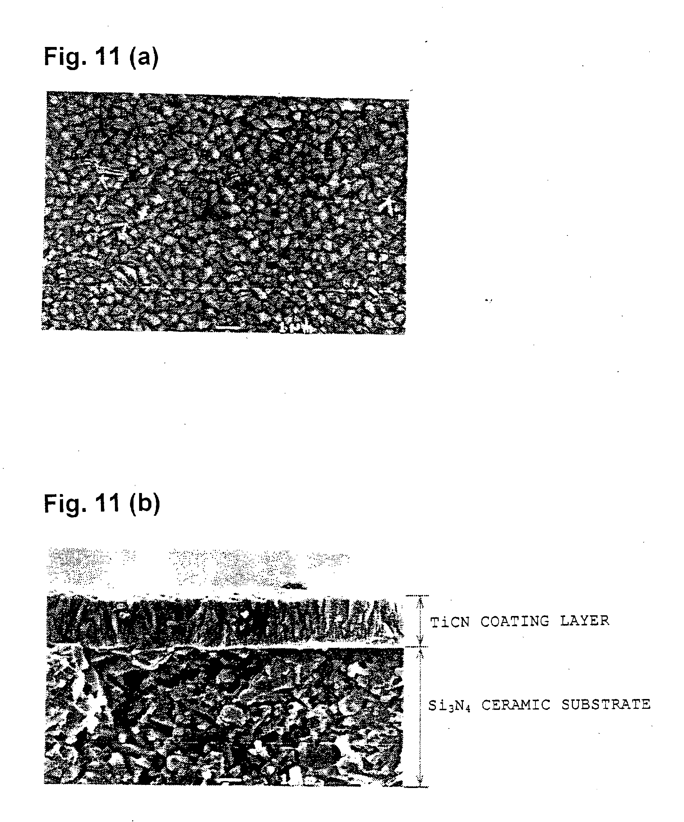

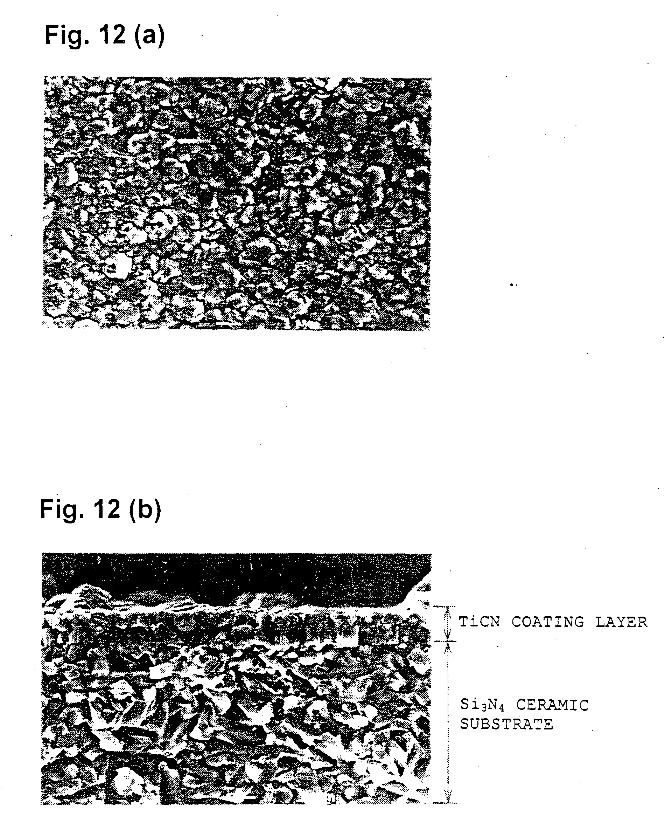

The foregoing results are shown in Table 3. That is, it is found that when the average thickness t of the titanium carbide/nitride coating layer and also the ratio d/t of the average size d to the average thickness t of the crystal grains come under the numerical ranges described in claims of the application, the good breakage resistance is obtained. Incidentally, Fig. 11 is SEM-observed images of a surface ((a)) and a broken surface ((b)) of the coating layer formed on test article (Example) No. 2 in Table 3. Fig. 12 is SEM-observed images of a surface ((a)) and a broken surface ((b)) of the coating layer formed on test article (Comparative Example) No. 13 in Table 3.

## Claims

1. A cutting tool comprising:
a tool body comprising a ceramic substrate made of silicon nitride ceramic, said substrate having a surface coated with a titanium carbide/nitride coating layer,
wherein the titanium carbide/nitride coating layer has a structure made mainly of columnar crystal grains grown in the layer thickness direction, and when an average size of crystal grains observed on the surface of the titanium carbide/nitride coating layer is expressed by d and an average thickness of the titanium carbide/nitride coating layer by t, t is in the range of from 0.5 to 3 µm and the value of d/t is least 0.1 and at most 0.5.

2. A cutting tool according to claim 1, wherein the titanium carbide/nitride coating layer is formed by CVD in a temperature range of 750°C to 900°C.

3. A cutting tool according to claim 1 or 2, wherein the total amount of a sintering aid component contained in the silicon nitride ceramic is 5 % by mass or less.

4. A cutting tool according to any one of claims 1 to 3, wherein an intermediate titanium nitride coating layer is provided between the titanium carbide/nitride coating layer and the ceramic substrate.

5. A cutting tool according to claim 4, wherein the average thickness of the titanium nitride coating layer is in the range of from 0.2 µm to 1 µm.

6. A cutting tool according to any one of claims 1 to 5, wherein the exterior of the titanium carbide/nitride layer is coated with a titanium nitride coating layer.

7. A cutting tool according to any one of claims 1 to 6, wherein the tool body is constructed as a throwaway chip.

8. A cutting tool according to claim 7, comprising the throwaway chip and a chip holder in which the throwaway chip is installed, for easy attachment and detachment.
